# EUROPÄISCHE PATENTSCHRIFT

(11) **EP 2 992 993 B1**
(45) Veröffentlichungstag und Bekanntmachung des Hinweises auf die Patenterteilung: **23.10.2019**
(21) Anmeldenummer: 15183107.0
(22) Anmeldetag: 31.08.2015
(51) Int. Cl.: B23Q 1/03, B27C 5/06, B27M 1/08, B23Q 17/00

(54) **VORRICHTUNG UND VERFAHREN ZUM POSITIONIEREN EINES SPANNELEMENTS**
DEVICE AND METHOD FOR POSITIONING A TENSIONING ELEMENT
DISPOSITIF ET PROCEDE DESTINES AU POSITIONNEMENT D'UN ELEMENT DE SERRAGE

(30) Priorität: 04.09.2014 DE 102014012957
(43) Veröffentlichungstag der Anmeldung: 09.03.2016
(73) Patentinhaber: HOMAG GmbH, 72296 Schopfloch (DE)
(72) Erfinder: Calmbach, Martin, 72160 Horb-Dießen (DE); Gringel, Martin, 72479 Straßberg (DE); Frey, Jochen, Dipl.-Ing., 72178 Waldachtal (DE)
(74) Vertreter: Hoffmann Eitle

(56) Entgegenhaltungen:
- EP-A1- 1 279 465
- DE-A1- 19 523 198
- US-A- 5 897 275
- US-A1- 2010 327 506

## Beschreibung

### Technisches Gebiet

Die vorliegende Erfindung betrifft eine Vorrichtung zur Positionierung eines Spannelements. Weiterhin stellt die Erfindung ein diesbezügliches Verfahren bereit.

### Stand der Technik

Um die Bearbeitung von Werkstücken aus Holz oder Holzersatzstoffen in einem Bearbeitungszentrum zu ermöglichen, muss das entsprechende Werkstück mit Hilfe von Spannelementen festgehalten werden, um so eine sichere relative Positionierung zwischen Werkzeug und Werkstück sicherstellen zu können.

Da die zu bearbeitenden Werkstücke sich teilweise stark in ihren Formen und Abmessungen unterscheiden können, ist es erforderlich, das verwendete Spannmittel möglichst vielseitig auszuführen. Dies kann zum einen dadurch erreicht werden, dass Spannelemente in ihrer Anzahl bedarfsgerecht dem Bearbeitungszentrum hinzugefügt oder diesem entnommen werden können. Weiterhin kann ein vielseitigerer Einsatz der Spannelemente erreicht werden, indem diese werkstückabhängig auf dem Bearbeitungstisch des Bearbeitungszentrums positioniert werden.

Bei plattenförmigen Werkstücken haben sich als Spannelemente insbesondere Saugelemente bewährt, welche das Plattenmaterial durch Bereitstellen eines Unterdrucks zwischen der Spannfläche eines Saugspanners und der Plattenoberfläche einspannen bzw. fixieren. Bezüglich der Positionierung der Spannelemente ist beispielsweise aus der DE 203 08 354 U1 eine Rüsthilfe bekannt, welche die Soll-Position der Saugspanner visuell anzeigt. Diese ermöglicht eine genaue Positionierung der Saugspanner dadurch, dass es einem Bediener mit Hilfe eines optischen Umlenksystems ermöglicht wird, zu erkennen, ob die angestrebte Soll-Position des Saugspanners beim Verschieben erreicht worden ist oder nicht. Ist der die Positionierung der Saugspanner ausführende Bediener davon überzeugt, dass der jeweilige Saugspanner die richtige Position eingenommen hat, so quittiert er dies. Ist dies für sämtliche Saugspanner geschehen, kann der Bearbeitungsvorgang im Bearbeitungszentrum beginnen.

Allerdings kann ein derartiges System in der Praxis nach wie vor zu einer fehlerhaften Positionierung der Spannelemente führen. So ist es trotz des optischen Umlenkelements denkbar, dass ein Bediener die richtige Positionierung leicht verfehlt. Tritt dies im Zusammenhang mit entsprechend ausgebildeten Werkstücken auf, kann eine derartige Fehlpositionierung eines Spannelements ungewünschte Folgen haben. So kann es zu einer ungenügenden Fixierung des Plattenmaterials kommen, wenn dieses beispielsweise die Spannfläche nicht vollständig bedeckt. Bei Saugspannern kann dies zu einem Zusammenbruch des Vakuums führen, sodass das Werkstück zumindest partiell nicht mehr im Bearbeitungszentrum fixiert ist, sondern stattdessen lediglich auf dem jeweiligen Saugspanner aufliegt. Die Folge kann Ausschuss, Unterbrechung des Bearbeitungsvorgangs oder gar eine Beschädigung der Werkzeugmaschine sein.

Auch die DE 10 2008 051 116 A1 offenbart ein System zur Positionierung von Spannvorrichtungen. Im Unterschied zum vorgenannten Dokument erfolgt hier jedoch keine Anzeige der Soll-Position. Stattdessen wird der Bediener beim manuellen Positionieren der Spannvorrichtungen durch ein Leuchtsignal darauf hingewiesen, dass die Position der Spannvorrichtung mit einem in einer Steuerzentrale gespeicherten Referenzwert übereinstimmt. Stimmt die Ist-Position der Spannvorrichtung dagegen nicht mit dem Referenzwert überein, zeigt das System die Richtung an, in welche die Spannvorrichtung zu bewegen ist. Da der Bediener allerdings nicht weiß, wie weit die Spannvorrichtung bewegt werden muss, bevor sie die Soll-Position erreicht, ist die Positionierung der Spannvorrichtung aufwändig und umständlich. Entweder tastet sich ein Bediener nur langsam an die vorgesehen Position heran, damit er nicht über das Ziel hinausschießt, oder er nimmt das Überfahren der vorgesehenen Position in Kauf und nähert sich der Soll-Position iterativ an.

Die DE 195 23 198 A1 offenbart eine Bearbeitungsmaschine zum Bearbeiten von Paneelen, Platten und/oder Scheiben, die eine Mehrzahl von Befestigungsorganen für die zu bearbeitenden Teile aufweist. Die Befestigungsorgane sind beweglich auf einem Arbeitstisch der Bearbeitungsmaschine angeordnet. Mit dem Arbeitskopf der Bearbeitungsmaschine verbundene Mittel sind vorgesehen, die an den Befestigungsorganen angreifen können, sodass diese bei einer Relativbewegung zwischen den Arbeitskopf und dem Arbeitstisch verlagert und in vorbestimmten Positionen auf dem Arbeitstisch angeordnet werden können.

### Zusammenfassung der Erfindung

Es war somit Aufgabe der vorliegenden Erfindung, eine Vorrichtung und ein Verfahren bereitzustellen, die eine genaue und zuverlässige Positionierung von Spannelementen in einem Bearbeitungszentrum ermöglichen. Insbesondere sollten es die Vorrichtung und das Verfahren einem Bediener ermöglichen, auf direktem Weg eine genaue Positionierung der Spannelemente vorzunehmen.

Erfindungsgemäß wird diese Aufgabe durch die Vorrichtung zur Positionierung eines Spannelements nach Anspruch 1, die Bearbeitungsstation nach Anspruch 10 und das Verfahren zum Positionieren eines Spannelements nach Anspruch 11 gelöst. Die jeweiligen abhängigen Ansprüche sind bevorzugte weitere Ausführungsformen der Erfindung.

Die Erfindung stellt insbesondere eine Vorrichtung nach dem beigefügten Anspruch 1 bereit.

Dadurch, dass der Bearbeitungsstation ein Signal bereitgestellt wird, das die Ist-Position des Spannelements umfasst, kann die Bearbeitungsstation überprüfen, ob das mindestens eine Spannelement richtig auf dem Bearbeitungstisch des Bearbeitungszentrums positioniert ist. Bedienungsfehlern seitens des das Spannelement positionierenden Personals kann somit effektiv vorgebeugt werden.

Weiterhin kann die Rückmeldung der Spannelementposition sicherstellen, dass die korrekte Anzahl an Spannelementen auf dem Bearbeitungstisch positioniert ist. Mit anderen Worten ist es mit der erfindungsgemäßen Vorrichtung möglich, nicht nur die Position der Spannelemente, sondern auch ihre Anzahl zu überprüfen und so zu verhindern, dass es zu Einspann-, Bearbeitungsfehlern oder Fehlfunktionen des Bearbeitungszentrums kommt. So etwas kann zum Beispiel durch ein im Werkzeugpfad stehendes Spannelement verursacht werden, sodass beim Abfahren der Werkzeugkontur die Gefahr einer Kollision zwischen dem Werkstück und dem Bearbeitungswerkzeug besteht.

Die Positionserfassungseinrichtung, welche die Ist-Position des Spannelements feststellt und dann an die Bearbeitungsstation weitergibt weist einen Sensor auf, der mit Hilfe eines von einem Signalgeber abgegebenen Signals die Ist-Position des Spannelements ermittelt. Bevorzugt ist das vom Signalgeber abgegebene Signal, welches für die Positionserfassung verwendet wird, das gleiche Signal, welches die Soll-Position für das bewegbare Spannelement anzeigt.

Zumindest ein Teil der Positionserfassungseinrichtung kann am Spannelement angeordnet sein. Dann weist jedes Spannelement der Bearbeitungsstation zumindest einen Teil der Positionserfassungseinrichtung auf.

Bei Bearbeitungsstationen bietet es sich zumeist an, die Spannelemente in einer X-Y-Ebene des Bearbeitungstisches zu bewegen. Genauer gesagt erfolgt vorzugsweise eine Verschiebung eines Spannelements in der Längsrichtung des Tisches (X-Richtung). Dabei ist das Spannelement bevorzugt auf einer Konsole angeordnet. Bei mehreren Spannelementen auf einer Konsole können folglich mehrere Spannelemente gleichzeitig in X-Richtung verschoben werden. Die Verschiebung in Y-Richtung, d.h. in der Querrichtung des Bearbeitungstisches, erfolgt bevorzugt an einer Konsole entlang. Bei Einsatz einer Konsole weist diese den Teil der Positionserfassungseinrichtung auf, der die eine Raumrichtung erfasst, während die andere Raumrichtung an dem Spannelement selbst ermittelt wird.

In jedem Fall wird die Ist-Position eines jeden Spannelements zu der Steuerung der Bearbeitungsstation übertragen, sodass dieser ein Feedback über die richtige Positionierung eines jeden Spannelements zur Verfügung steht.

Für die Anzeige der Soll-Position wird eine absolute Positionsanzeige an dem Bearbeitungstisch bereitgestellt, die mit Hilfe von Positionierungselementen die Soll-Position für ein bewegbares Spannelement anzeigt. Dem bedienenden Personal ist es somit ein Leichtes, das Spannelement zu seiner vorgesehenen Position zu verschieben.

Erfindungsgemäß ist das Positionierungselement eingerichtet, das bewegbare Spannelement in die Sollposition zu bewegen. Ein Eingriff des bedienenden Personals ist damit nicht mehr notwendig.

Bei einer bevorzugten Ausführungsform der Erfindung ist die Vorrichtung eingerichtet zusätzlich zu der Soll-Position Eigenschaften des zu positionierenden Spannelements anzeigen und/oder rückmelden zu können.

Diese Ausführungsform hat den Vorteil, dass mit ihr nicht nur die korrekte Positionierung anzeigbar ist, sondern gleichzeitig einem Benutzer angezeigt wird, welche Eigenschaften das zu positionierende Spannelement aufweisen sollte. Ihm wird also beispielsweise mitgeteilt, welche Spannelementgröße oder welcher Spannelementtyp an der jeweiligen Soll-Position vorgesehen ist. Diese Anzeige erfolgt dabei bevorzugt mittels des Positionierungselements.

Zusätzlich oder alternativ können bei dieser Ausführungsform zudem Eigenschaften des Spannelements an die Steuerung der Bearbeitungsstation rückgemeldet werden. Hierzu kann einerseits analog zu dem oben Beschriebenen der tatsächlich eingesetzte Spannelementtyp oder die tatsächlich eingesetzte Spannelementgröße gehören. Auch ist es denkbar, andere Eigenschaften zu überprüfen, wie z. B. die Saugfunktion eines Saugspannelements durch Messen und Rückmelden eines Drucks oder einer Strömung. Auch diese Funktion ist bevorzugt in das Positionierungselement und/oder die Positionserfassungseinrichtung integriert.

Bei einer bevorzugten Ausführungsform der Vorrichtung ist die Positionserfassungseinrichtung eingerichtet, die Position des Spannelements in einer Raumrichtung, bevorzugt zwei Raumrichtungen und noch bevorzugter drei Raumrichtungen, zu erfassen.

Das Feststellen der Position des Spannelements in mindestens zwei Raumrichtungen, beispielsweise der X-Richtung und der Y-Richtung, ermöglicht es der Bearbeitungsstation, das Spannelement auch bei komplexen Werkstückformen sicher zu positionieren. Insbesondere ist es bei einer Positionserfassung in allen drei Raumrichtungen möglich, einem ungleichmäßigen Aufliegen des Werkstücks auf dem Spannelement vorzubeugen. Damit wird ein Verbiegen des Werkstücks beim Fixieren aufgrund ungleichmäßig hoch angeordneter Spannelemente verhindert und so der damit verbundenen ungenaueren Bearbeitung vorgebeugt.

Die Positionserfassung kann dabei für jede Raumrichtung getrennt oder für zwei oder oder drei Raumrichtungen zusammen erfolgen.

Bei einer weiteren besonders bevorzugten Ausführungsform der Vorrichtung weist die Positionserfassungseinrichtung einen Sender auf, der eingerichtet ist, das Signal drahtlos bereitzustellen.

Diese Ausführungsform ermöglicht es, dass Signal der Ist-Position und/oder Soll-Position des Spannelements drahtlos zu übertragen. Bevorzugt sind Spannelemente dabei einzeln mit Sendern versehen. Die Vorrichtung gemäß dieser Ausführungsform zeichnet sich durch eine hohe Flexibilität bezüglich der Positionierung der Spannelemente aus, da keine zusätzlichen Einrichtungen, wie z.B. Kabel, zur Übertragung der Ist-Position bereitgestellt und nachgeführt werden müssen.

Die drahtlose Übertragung erfolgt bevorzugt durch elektromagnetische Wellen (z. B. durch WLAN), Licht und/oder durch Schall. Das Signal S kann zudem die Ist-Position des Spannelements dadurch umfassen, indem es der Bearbeitungsstation als Ortungssignal dient. Mit anderen Worten sendet der Sender ein Signal, das von einem feststehenden Empfänger an der Bearbeitungsstation empfangen wird. Dieser verwendet das Ortungssignal des Senders, um das jeweilige Spannelement auf dem Bearbeitungstisch zu lokalisieren.

Bei einer weiteren Ausführungsform ist mit dem Signal mindestens ein weiterer mit den Spannelementen zusammenhängender Betriebsparameter übertragbar.

Dies hat den Vorteil, dass diese Parameter zusammen mit der Positionierung überprüft werden können. So kann beispielsweise der Zustand der Fixierung eines Werkstücks oder die für die Fixierung zur Verfügung stehende Kraft festgestellt werden. Handelt es sich bei dem Spannelement beispielsweise um einen Saugspanner, so ist dies durch Messung des Unterdrucks und Übertragung dieses Messwerts möglich. Die Einrichtung, welche die Rückmeldung der Betriebsparameter ermöglicht, kann dabei, wie oben beschrieben, in das Positionierelement integriert und/oder ein Teil der Positionserfassungseinrichtung sein.

Die Positionserfassungseinrichtung weist zumindest ein drahtloses, insbesondere optisches, magnetisches, und/oder schallbasiertes Element, zur Positionserfassung auf.

Je nach Arbeitsumgebung der Vorrichtung sind möglicherweise eine oder mehrere dieser Elemente zur Positionserfassung zu bevorzugen. So kann beispielsweise mit Hilfe von optischen Elementen auf einfache Weise die Ist-Position ermittelt werden, indem zur Positionsermittlung eine optische Anzeige der Soll-Position verwendet wird. Schallbasierte Elemente haben den Vorteil, dass sie relativ schmutzunempfindlich sind und kostengünstig die Position in mehreren Raumrichtungen ermitteln können. Bei der Positionserfassungseinrichtung eingesetzte magnetische (auch elektromagnetische) Elemente können das Material des Werkstücks durchdringen und somit selbst während der Bearbeitung des Werkstücks eine Positionserfassung ermöglichen. Folglich kann hiermit eine Lockerung der Spannelemente und dadurch hervorgerufene Verschiebung festgestellt werden.

Die Elemente dienen folglich zum Senden und Empfangen der Signale, die zur Feststellung der Position verwendet werden. Umgekehrt bedeutet dies, dass hiermit bevorzugt nicht Elemente zu verstehen sind, die lediglich zur Weiterleitung bzw. Übertragung der Positionsinformation verwendet werden.

Bei einer weiteren Ausführungsform der vorliegenden Erfindung ist die Positionserfassungseinrichtung mit dem mindestens einen Positionierungselement verknüpft.

Diese Verknüpfung hat den Vorteil, dass das Feedback der Positionserfassungseinrichtung in Steuerungssignale für das Positionierungselement umgewandelt werden können, welches das Spannelement entsprechend positioniert. Dies erspart dem Bedienpersonal jeglichen Eingriff bei der Positionierung und vermeidet so Positionierungsfehler.

Die Verknüpfung selbst kann z. B. durch eine Verbindung eines Drehgebers der Positionserfassungseinrichtung oder eines anderen Sensors zur Positionsfeststellung über eine Steuerung mit einem Servomotor erfolgen. Bei einem Linearmotor ist dies sogar ohne zusätzlichen Positionserfassungssensor durch seine integralen Bauteile möglich.

Bei einer weiteren bevorzugten Ausführungsform der Vorrichtung weist diese ferner ein Vergleichsmodul auf, das eingerichtet ist, einen Sollwert, insbesondere die Soll-Position mit der Ist-Position zu vergleichen. Bevorzugt ist mit dem Vergleichsmodul ein Warnmodul verbunden, das eingerichtet ist, ein Kollisionswarnsignal abzugeben, wenn die Soll-Position nicht innerhalb eines festgelegten Toleranzwerts mit der Ist-Position übereinstimmt.

Das Kollisionswarnsignal gibt dem Bediener ein direktes Feedback und ermöglicht ihm oder ihr so unmittelbar eine Korrektur eines fehlpositionierten Spannelements vorzunehmen. Die Vorrichtung kann zudem beispielsweise selbst Maßnahmen ergreifen, um eine Fehlpositionierung eines Spannelements zu korrigieren. Gleiches gilt für andere Sollwerte. So kann beispielsweise ein Saugdruck erhöht werden, um eine feste Auflage des Werkstücks auf einem Saugspanner sicherzustellen.

Bei einer weiteren besonders bevorzugten Ausführungsform der Vorrichtung weist diese ferner ein Nachstellmittel, insbesondere einen Antrieb, bevorzugt einen Stellantrieb, auf, der die Position des Spannelements auf Grundlage der Soll-Position und der Ist-Position zumindest nachstellt.

Mit dieser Ausführungsform ist folglich kein manuelles Nachstellen seitens des Bedienpersonals notwendig, um eine neue Positionierung des Spannelements zu erreichen. Vielmehr kann durch das Bedienpersonal bei dieser Ausführungsform zunächst eine lediglich grobe Positionierung oder ein Aufsetzen auf den Bearbeitungstisch erfolgen. Anschließend führt die Vorrichtung eine Nacheinstellung aus. Der Vorteil eines Nachstellens im Gegensatz zu einer vollständig automatischen Einstellung bzw. Positionierung des Spannelements ist, dass der Antrieb wesentlich einfacher ausgeführt werden kann.

Weiterhin ist es im Rahmen dieser Ausführungsform beispielsweise möglich, jedes Spannelement mit einem gesonderten Antrieb aufzurüsten, der eine Positionierung zumindest innerhalb eines festgelegten Toleranzbereichs ermöglicht. Es entfällt somit ein im Allgemeinen aufwändiges Zustellsystem, das den gesamten Bearbeitungstisch abdeckt und folglich einen höheren Platzbedarf in der Bearbeitungsstation erforderlich macht. Zudem wird die Wartung bei dem Spannelement mit eigenen Antrieben vereinfacht, da eine Wartung einzelner Spannelemente durch einfaches Austauschen derselbigen möglich ist, ohne dabei Standzeiten der Bearbeitungsstation hervorzurufen.

Als Antriebe kommen alle dem Fachmann geläufigen Antriebstypen in Frage, wie beispielsweise Stellantriebe, druckluftbetriebene Antriebe oder auch vakuumbetriebene Antriebe. Letztere Antriebe bieten sich insbesondere bei Saugelementen an, da die entsprechende Antriebsquelle bereits in die Bearbeitungsstation integriert ist.

Bei einer besonders bevorzugten Ausführungsform der Vorrichtung weist das Positionierelement ferner ein Umlenkelement auf, um die Soll-Position des Spannelements, die bevorzugt über eine LED angezeigt wird, an die Positionserfassungseinrichtung weiterzugeben.

Ein derartig ausgeführtes Umlenkelement ermöglicht es, das Signal der Soll-Position an den Bediener als Signalgeber für die Ist-Position zu verwenden. Anders ausgedrückt ist somit der Signalgeber zum Anzeigen der Soll-Position mit dem Signalgeber zum Erfassen der Ist-Position identisch. Es müssen somit nicht zwei getrennte Systeme an der Bearbeitungsstation installiert werden, was den Aufwand und die Kosten der erfindungsgemäßen Vorrichtung im Gegenstand zu den im Stand der Technik bekannten Systemen erheblich verringert.

Das Signal zum Anzeigen der Soll-Position wirkt punktuell über einen beschränkten Bereich, um auf die vorgesehene Position für ein Spannelement hinzuweisen. Um zur Anzeige der Soll-Position und Feststellung der Ist-Position das gleiche Signal zu verwenden zu können, gibt es insbesondere zwei Möglichkeiten.

Zum einen kann die Anzeige der Soll-Position und Feststellung der Ist-Position zeitversetzt erfolgen. Genauer gesagt, wird zunächst die Soll-Position angezeigt, sodass das Element zur Anzeige der Soll-Position nur einem Bereich aktiviert wird, bei dem sich eine vorgesehene Position für das Spannelement befindet. Zu einem weiteren anderen Zeitpunkt werden hingegen bevorzugt sämtliche Elemente, die für eine mögliche Anzeige der Soll-Position vorgesehen sind, aktiviert, sodass diese in diesem Fall als Signalgeber zur Feststellung der Ist-Position durch das Positionserfassungssystem dienen.

Andererseits ist es möglich, dass die Elemente zur Anzeige der Soll-Position für die Soll-Position ein anderes Signal als für die Anzeige der Ist-Position ausgeben, sodass diese dem Positionserfassungssystem jederzeit die notwendigen Informationen liefern können, um die Ist-Position des jeweiligen Spannelements festzustellen. Bei Verwendung optischer Elemente könnte dies beispielweise durch unterschiedliche Helligkeit oder Wellenlängen erreicht werden.

Weiterhin stellt die vorliegende Erfindung eine Bearbeitungsstation zum Bearbeiten eines Werkstücks, insbesondere aus Holz, einem Holzersatzstoff, einem Metall und/oder einem Kunststoff bereit, die eine erfindungsgemäße Vorrichtung zur Positionierung eines Spannelements aufweist.

Durch die Verwendung einer erfindungsgemäßen Vorrichtung zum Positionieren eines Spannelements kann eine Bearbeitungsstation bereitgestellt werden, bei der Werkstücke unabhängig von ihrer Beschaffenheit durch eine exakte Positionierung von Spannelementen zuverlässig bearbeitetet werden können.

Zudem stellt die vorliegende Erfindung ein Verfahren zum Positionieren eines Spannelements bereit, das zum Fixieren eines Werkstücks in einer Bearbeitungsstation vorgesehen ist. Das Verfahren umfasst mehrere Schritte. So erfolgt im Rahmen des Verfahrens ein Anzeigen einer Soll-Position für das Spannelement mit Hilfe eines Positionierungselements. Weiterhin wird das Spannelement zu der angezeigten Soll-Position bewegt. In dem erfindungsgemäßen Verfahren erfolgt zudem ein Erfassen der Ist-Position des Spannelements mit einer Positionserfassungseinrichtung und ein Bereitstellen eines Signals, das die Ist-Position des Spannelements umfasst.

Durch ein derartiges Positionieren eines Spannelements ist eine Fehlbedienung durch das Bedienungspersonal bei der Positionierung eines Spannelements quasi ausgeschlossen. Zwar kann weiterhin eine Quittierung bei erfolgter Positionierung der Spannelemente aus Gründen der Arbeitssicherheit vorgesehen sein, doch ist diese nicht mehr die alleinige Informationsquelle für die Bearbeitungsstation, dass eine korrekte Positionierung der Spannelemente erfolgt ist.

Bei einer weiteren Ausführungsform des Verfahrens zum Positionieren eines Spannelements wird ein Kollisionssignal ausgegeben, wenn die Soll-Position mehr als um einen festgelegten Toleranzwert von der Ist-Position abweicht.

Hierdurch ist eine schnelle Behebung eines fehlpositionierten Spannelements durch den Bediener oder eine Nachstelleinrichtung, wie oben ausgeführt, möglich. Das Kollisionssignal informiert bevorzugt auch darüber, welches Spannelement falsch positioniert ist.

Bei einer besonders bevorzugten Ausführungsform des Verfahrens zum Positionieren des Spannelements wird das zu der Soll-Position bewegte Spannelement auf Grundlage der Soll-Position und der ermittelten Ist-Position über einen Antrieb zumindest nachpositioniert wenn die Soll-Position mehr als um einen festgelegten Toleranzwert von der Ist-Position abweicht.

Bei dieser Ausführungsform ist, wie oben bereits beschrieben, keine Behebung durch das Bedienpersonal notwendig, da zumindest ein Nachstellen automatisch ausgeführt werden kann, um eine ausreichend genaue Positionierung eines Spannelements zu erreichen. Dieses Nachstellen erfolgt bevorzugt individuell für jedes Spannelement.

Weiterer Vorteil der Spannelemente mit integriertem Antrieb ist, dass diese auf einfache Weise bei bereits bestehenden Maschinen nachrüstbar sind.

### Kurze Beschreibung der Figuren

In den Figuren weisen gleiche oder gleichwirkende Merkmale gleiche Bezugszeichen auf. Obwohl derartige Merkmale im Folgenden zumeist nur in Verbindung mit einer einzigen Ausführungsform beschrieben werden, beziehen sich die Eigenschaften dieser Merkmale und die diesbezüglich aufgezählten Abänderungen und Modifikationen auch auf andere aufgeführte Ausführungsbeispiele.
Fig. 1 zeigt eine erste beispielhafte Ausführungsform einer erfindungsgemäßen Vorrichtung.
Fig. 2 zeigt eine weitere Ausführungsform einer erfindungsgemäßen Vorrichtung, bei der die Anzeige der Soll-Position und die Erfassung der Ist-Position mit zwei getrennten Systemen erfolgt.
Fig. 3 zeigt eine beispielhafte Ausführungsform der vorliegenden Erfindung, bei der das Positionieren eines Spannelements mit drahtloser Übertragung der Ist-Position erfolgt.
Fig. 4 zeigt eine Anordnung einzelner Spannelemente auf einem Bearbeitungstisch einer Bearbeitungsstation.
Fig. 5 zeigt zwei Spannelemente mit unterschiedlich großen Saugflächen.
Fig. 6 zeigt eine Anordnung einzelner automatische verstellbarer Spannelemente auf einer Konsole.

### Ausführliche Beschreibung einzelner bevorzugter Ausführungsformen

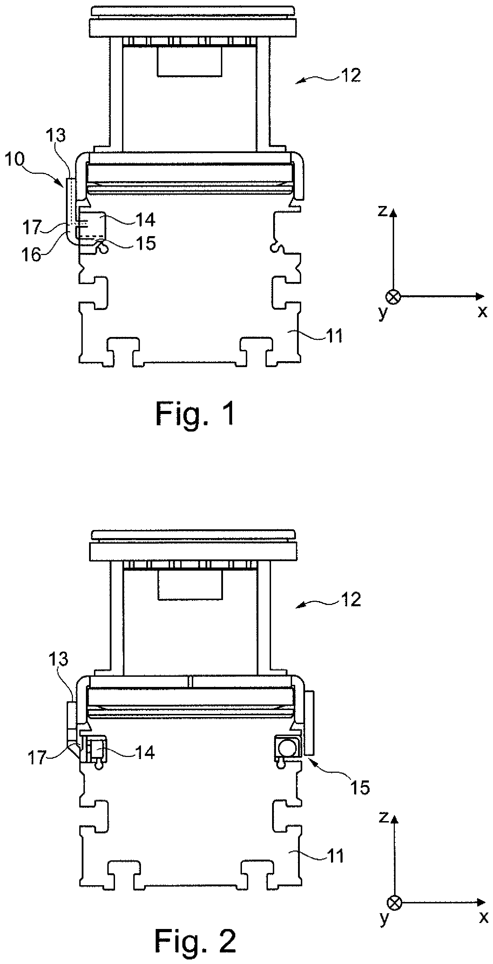

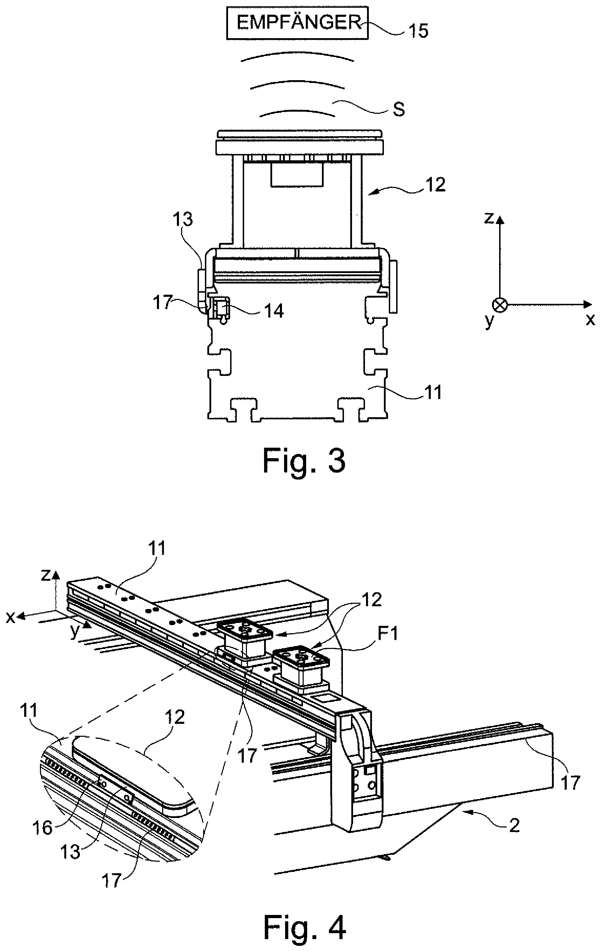

Fig. 1 zeigt eine erfindungsgemäße Positioniervorrichtung 10. Die Vorrichtung zum Positionieren eines Spannelements 10 weist eine Konsole 11 auf, die ein Spannelement 12 unterstützt. Das Spannelement 12 ist in Y-Richtung entlang der Konsole 11 verschiebbar. Die Verschiebung des Spannelements 12 in X-Richtung erfolgt zusammen mit der Konsole 11 entlang der Längsrichtung (X-Richtung) des Bearbeitungstisches 2 (s. Fig. 4). Auf diese Weise können mehrere Spannelemente 12 mit Hilfe der Konsole 11 gleichzeitig in X-Richtung verschoben werden.

Alternativ ist es auch möglich, die Spannelemente 12 ohne die Verwendung einer Konsole 11 in X-Richtung einzeln verschiebbar auszuführen oder auch beides vorzusehen, d.h. frei bewegliche Spannelemente 12 und Spannelemente 12, die auf einer Konsole 11 unterstützt werden. Die auf einer Konsole 11 angeordneten Spannelemente 12 sind nur zusammen in einer Raumrichtung bewegbar.

Bei dem Ausführungsbeispiel in Fig. 1 handelt es sich bei dem Spannelement 12 um einen Saugspanner, der das zu bearbeitende Werkstück (nicht gezeigt) auf seiner Spannfläche unter Anwendung eines Unterdrucks ansaugt und so fixiert.

Diese Fixierung über das Spannelement 12 funktioniert jedoch nur dann, wenn die Spannelemente 12 außerhalb des mit einem Werkzeug zu bearbeitenden Bereichs des nicht gezeigten Werkstücks und unter diesem positioniert sind.

Um eine genaue Positionierung eines Spannelements 12 an einer vorgesehenen Soll-Position zu ermöglichen, sieht die Positioniervorrichtung 10 ein Positionierungselement 14 vor, über das die Soll-Position des Spannelements 12 angezeigt werden kann. In Fig. 1 ist lediglich der Teil der Positioniervorrichtung 10 dargestellt, mit Hilfe dessen die Soll-Position des Spannelements 12 bzw. der Konsole 11 in Y-Richtung angezeigt wird. Ein auf den gleichen technischen Prinzipien beruhender Teil der Positioniervorrichtung 10 ermöglicht eine ebenso genaue Positionierung des Spannelements 12 in der X-Richtung. Eine beispielhafte Ausführungsform dieses Teils der Positioniervorrichtung ist in Fig. 4 dargestellt.

In Fig. 1 stellt das Positionierungselement 14 dem Bedienpersonal eine Anzeige der Soll-Position 17 bereit, mit Hilfe der das Spannelement 12 in der jeweiligen Achsrichtung positioniert werden kann.

Die Anzeige der Soll-Position 17 findet, wie in Fig. 4 gezeigt, bevorzugt über ein Lichtsignal statt. In Fig. 1 erleichtert eine Anzeige der Ist-Position 13 dem Bedienpersonal festzustellen, ob das auf der Konsole 11 befindliche Spannelement 12 in der Y-Richtung mit der von dem Positionierungselement 14 über die Anzeige der Soll-Position 17 ausgegebene Soll-Position übereinstimmt.

Weiterhin ist in Fig. 1 ein Umlenkelement 16 gezeigt, über das das von dem Positionierungselement 14 ausgegebene Signal an die Positionserfassungseinrichtung 15 weitergeleitet wird. Folglich wird in der in Fig. 1 gezeigten Ausführungsform das Positionierungselement für die Anzeige der Ist-Position 13 des Spannelements 12 gleichzeitig mittels des Umlenkelements 16 zur Erfassung der Ist-Position über der Positionserfassungseinrichtung 15 verwendet.

Das Umlenkelement 16 kann beispielsweise ein von dem Positionierungselement 14 abgegebenes Lichtsignal zu der Positionserfassungseinrichtung 15 übertragen. Bei Verwendung einer der anderen oben genannten Techniken zur Positionierung bzw. zur Positionserfassung kann das Umlenkelement 16 gegebenenfalls das von dem Positionierungselement 14 abgegebene Signal in ein durch die Positionserfassungseinrichtung erfassbares Signal umwandeln. Gleiches gilt zusätzlich oder alternativ für die Anzeige der Ist-Position 13, mit deren Hilfe das Bedienpersonal einfacher erkennen kann, ob das Spannelement 12 richtig auf dem Bearbeitungstisch 2 positioniert ist.

Ist das Spannelement 12 mit Hilfe des Positionierungselements 14 bei der für die Bearbeitung des Werkstücks vorgesehenen Position positioniert, stellt die Positioniervorrichtung 10 über die Positionserfassungseinrichtung 15 der Steuerung des Bearbeitungszentrums ein Signal S bereit, welches die erfasste Ist-Position übermittelt. Folglich ist es der Steuerung des Bearbeitungszentrums möglich, die Positionierung des Spannelements 12 zu überprüfen. Befindet sich das Spannelement 12 nicht innerhalb eines festgelegten Toleranzbereichs im Verhältnis zur Soll-Position, kann die Steuerung ein Warn- bzw. Kollisionssignal ausgeben und somit den Bediener darauf aufmerksam machen, die Position des Spannelements 12 zu korrigieren.

Alternativ oder ergänzend ist es auch möglich, ein Spannelement 12 und/oder eine Konsole 11 mit einem Antrieb zu versehen, der ein automatisches Nachstellen der Spannelementposition ermöglicht, bis die Positionserfassungseinrichtung 15 mit Hilfe des Signal S meldet, dass sich das Spannelement 12 bei der vorgesehenen Soll-Position befindet. Die Übertragung des Signals S erfolgt dabei mit einem der vorgenannten Mittel. Dies erspart weitere, möglicherweise fehlerbehaftete, Eingriffe des Bedienpersonals.

Fig. 2 zeigt eine weitere Ausführungsform der Positioniervorrichtung 10. Im Unterschied zu Fig. 1 findet hier die Anzeige der Soll-Position 17 und das Erfassen der Ist-Position mittels der Positionserfassungseinrichtung 15 räumlich getrennt und bevorzugt auf unterschiedlichen physikalischen Prinzipien bzw. Signalen beruhend statt.

Die Spannelemente 12 können durch das Bedienpersonal manuell entsprechend zu der Soll-Position verschoben werden, die von dem Positionierungselement 14 über die Anzeige 17 angezeigt wird. Wie in Fig. 1 wird die Anzeige der Ist-Position dem Bedienpersonal mittels einer speziellen Einrichtung 13 erleichtert.

Die Positionserfassung findet, wie in Fig. 2 dargestellt, räumlich an einer anderen Stelle der Bearbeitungsstation statt. Dabei kann die Positionserfassungseinrichtung 15 ein auf dem gleichen Wirkprinzip basierendes Signal verarbeiten, wie das des Positionierungselements 14. Genauso ist es möglich, ein anderes der vorgenannten Signale zu verwenden. Beispielsweise kann die Anzeige der Soll-Position 17 über ein Lichtsignal erfolgen, während die Positionserfassungseinrichtung 15 die Ist-Position eines Spannelements 12 beispielsweise mittels Magnetismus oder per Ultraschall bestimmt.

Fig. 3 zeigt eine weitere Ausführungsmöglichkeit einer Positioniervorrichtung 10 für eine Bearbeitungsstation, mit der ein Werkstück (nicht gezeigt) mittels eines Werkzeugs (nicht gezeigt) bearbeitet werden kann. Das Positionierungselement 14 und die Anzeige der Soll-Position 17 sowie die Anzeige der Ist-Position 13, welche dem Bedienpersonal mitgeteilt werden, entspricht dem Aufbau der Fig. 2. Auch in Fig. 3 kann die Position optisch, wie z.B. über ein Lichtsignal (vergleiche Fig. 4) mittels der Anzeige 17 für die Soll-Position angezeigt werden.

Eine andere oder auch ergänzende Anzeigemöglichkeit könnte beispielsweise akustisch ausgeführt sein. Hierbei würde das Bedienpersonal ein Spannelement 12 mit Hilfe eines akustischen Signals zu der vorgesehenen Soll-Position verschieben.

Anders als in den Figuren 1 und 2 erfolgt allerdings in der Fig. 3 die Positionserfassung der Ist-Position mittels der Positionserfassungseinrichtung 15 über ein Signal S. Mit anderen Worten gibt bevorzugt das Spannelement 12 ein Positionssignal S ab, welches durch die Positionserfassungseinrichtung 15, d.h. einem Empfänger, erfasst werden kann. Anders als bei zuvor erwähnten möglicherweise drahtlosen Übertragungen eines Signals S, welches die Ist-Position des Spannelements 12 umfasst, ist das Signal S in Fig. 3 bevorzugt selbst ein Ortungssignal, welches durch den Empfänger der Positionserfassungseinrichtung 15 für die Ermittlung der Ist-Position des Spannelements 12 verwendet wird.

In Fig. 3 handelt es sich somit um ein drahtloses lokales Positionserfassungseinrichtung, welches eine der oben genannten Wirkprinzipien bzw. Signaltypen verwendet, um die Ist-Position des Spannelements 12 zu ermitteln. Die Ermittlung der Ist-Position kann dabei beispielsweise durch Triangulation erfolgen.

Selbstverständlich ist es bei dieser Konfiguration auch möglich, mit dem Signal S zudem weitere Zustände oder sonstige Informationen von einem Spannelement 12 zu der Steuerung des Bearbeitungszentrums zu übertragen. Beispielsweise ist es möglich, bei einem Saugspanner den erzeugten Unterdruck zu messen und zu übertragen, um so die Fixierung des Werkstücks überprüfen zu können.

Es ist insbesondere bei einer derartigen Ausführungsform der Positioniervorrichtung 10 möglich, auch die Z-Koordinate bzw. die Position des Spannelements in Z-Richtung mit in die Überprüfung der Spannelementpositionierung einzubeziehen. Auf diese Weise kann auch in Z-Richtung einer Kollision mit dem Werkzeug vorgebeugt werden. Auch ist es möglich, eine für das Werkstück in Z-Richtung, d. h. der vom Bearbeitungstisch 2 abgewandten Richtung, richtig positionierte Auflagefläche zu überprüfen und so eine optimale Haltekraft zu erhalten und einer ungewollten Verformung des Werkstücks vorzubeugen.

Fig. 4 zeigt eine beispielhafte Ausführungsform des Teils einer Positioniervorrichtung 10, mit dem eine korrekte Positionierung des Spannelements in X- und Y-Richtung ermöglicht wird. Mit Hilfe der Anzeige 17 wird die Soll-Position für jedes Spannelement 12 angezeigt. Ein Umlenkelement 16 leitet das von dem Positionierungselement 14 über die Anzeige 17 ausgegebene Signal, welches bevorzugt auch die Soll-Position eines Spannelements anzeigt, zu einer Positionserfassungseinrichtung 15 (nicht gezeigt) weiter. Diese ist in der beispielhaften Ausführungsform der Fig. 4 in das Spannelement 12 integriert und gibt ein drahtloses Signal S an die Steuerung der Bearbeitungsstation ab, welche zumindest die Position in Y-Richtung eines Spannelements 12 umfasst.

In Fig. 4 ist sowohl die Anzeige 17 für die Soll-Position in X-Richtung (linke Seite der Fig. 4) als auch die Anzeige 17 für die Soll-Position in Y-Richtung (jeweils unter den gezeigten Saugelementen 12) zu erkennen.

Weiterhin wird anhand Fig. 4 deutlich, dass es möglich ist, die Anzeige 17 sowohl zur Anzeige der Position als auch zur Anzeige der zu positionierenden Spannelementgröße zu verwenden. So ist im vergrößerten Bereich der Fig. 4 für die gezeigte Spannelementgröße F1 erkennbar, dass deren Platzierung jeweils durch das Ausmaß der Anzeige bzw. den Anzeigebereich vorgegeben wird. Die Anzeige der Soll-Position erfolgt in Fig. 4 zusätzlich, indem ein Teil der Anzeige periodisch aufleuchtet, der zur korrekten Positionierung eines Spannelements 12 mit der Anzeige der Ist-Position 13 in Übereinstimmung zu bringen ist. So ist unter dem Spannelement 12 mit der größeren Saugfläche F1 ein einzelner Lichtpunkt bzw. eine LED erkennbar, die durch Blinken benachbarter LEDs zeitweise als alleinstehende LED erkennbar ist. Mit anderen Worten sind in dem in Fig. 4 gezeigten Zeitpunkt die benachbarten LEDs gerade aus, sodass die dazwischenliegende LED als einzelne LED hervorsteht.

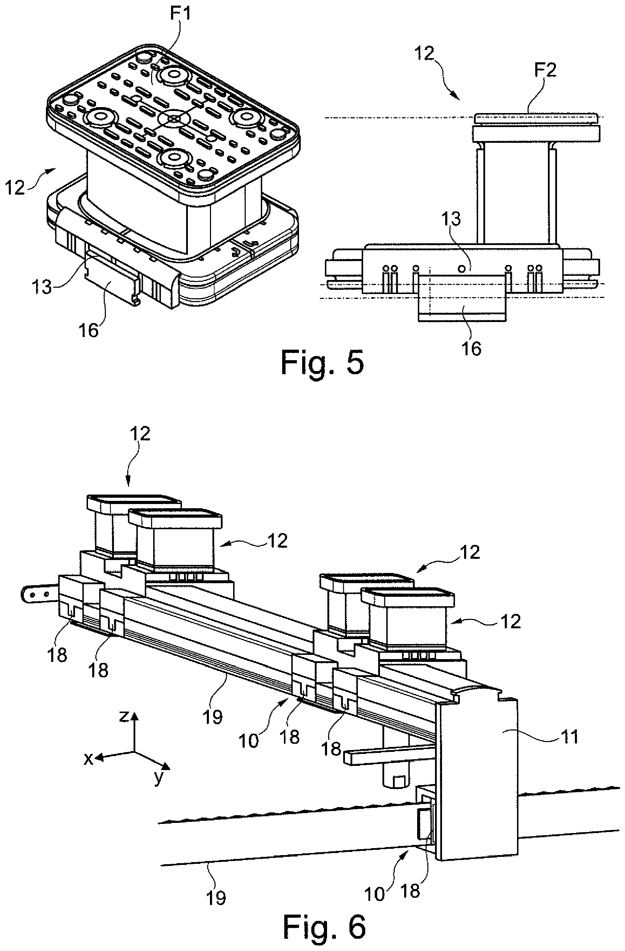

Selbstverständlich kann die Größe der Spannelemente beliebig gewählt werden. Beispielhaft sind diesbezüglich in Figur 5 zwei Spannelemente 12 mit unterschiedlichen Saugflächen F1 und F2 veranschaulicht. Bei dem auf der rechten Seite der Figur 5 dargestellten Spannelement 12 mit der kleineren Saugfläche F2 würde die obig beschriebene Anzeige der Soll-Position 17 dauerhaft aufleuchtende LEDs über die Breite der Saugfläche Fläche F2 aufweisen. Die oben beschriebene blinkende LED befände sich dementsprechend auf der in Figur 5 zu sehenden linken Seite der durchgehend leuchtenden LEDs.

In Figur 6 ist eine Vorrichtung 10 zur Positionierung von Spannelementen 12 dargestellt, die insbesondere dadurch von den vorherigen Ausführungsformen abweicht, dass die Positionierung automatisch erfolgt. Der Antrieb zum Versetzen bzw. Verschieben der Spannelemente 12 erfolgt über ein Mitnahmeelement 19, wie zum Beispiel ein Riemen, bevorzugt ein Zahnriemen, oder eine Kette. An den Spannelementen 12, die für eine automatische Positionierung vorgesehen sind, befinden sich jeweils Mitnehmer 18, die mit dem Mitnahmeelement 19 möglicherweise wählbar im Eingriff stehen. Dadurch wird eine Bewegung des Mitnahmeelements 19 auf einen Mitnehmer 18 und damit auf ein Spannelement 12 übertragen. Wie in Figur 6 zu erkennen, erfolgt eine automatische Positionierung bei dieser beispielhaften Ausführungsform sowohl in der X- als auch in der Y-Richtung. Allerdings ist es denkbar, bezüglich der Spannelementen und/oder der Raumrichtungen eine Kombination aus automatischer und manueller Positionierung vorzusehen.

Im Gegensatz zu den aus dem Stand der Technik bekannten Positionsvorrichtungen für Spannelemente einer Bearbeitungsstation kann somit mit der vorliegen Erfindung sichergestellt werden, dass ein korrekte Positionierung eines Spannelements erfolgt und somit ungewünschter Ausschuss von Werkstücken bis hin zu einer Beschädigung der Bearbeitungsstation verhindert werden können. Zudem können auch andere Parameter, wie beispielsweise der Zustand der Fixierung hierbei erfasst werden.

### Bezugszeichenliste

- 2: Bearbeitungstisch
- 10: Positioniervorrichtung
- 11: Konsole
- 12: Spannelement
- 13: Anzeige der Ist-Position
- 14: Positionierungselement
- 15: Positionserfassungseinrichtung
- 16: Umlenkelement
- 17: Anzeige der Soll-Position
- 18: Mitnehmer
- 19: Mitnahmeelement (z. B. Zahnriemen)
- S: Signal
- F1, F2: Saugflächen
- x, y, z: Raumrichtungen

## Patentansprüche

1. Vorrichtung (10) zur Positionierung eines Spannelements (12), das zum Fixieren eines Werkstücks in einer Bearbeitungsstation vorgesehen ist, wobei die Vorrichtung (10) aufweist:
mindestens ein Positionierungselement (14), das eingerichtet ist, die Soll-Position für ein bewegbares Spannelement (12) anzuzeigen und das bewegbare Spannelement (12) in die Sollposition zu bewegen, und
eine Positionserfassungseinrichtung (15), die eingerichtet ist, der Bearbeitungsstation ein Signal (S) bereitzustellen, das die Ist-Position des Spannelements (12) umfasst, und die zumindest ein drahtloses, insbesondere optisches, magnetisches und/oder schallbasiertes, Element zur Positionserfassung aufweist.

2. Vorrichtung (10) nach Anspruch 1,
bei der die Vorrichtung eingerichtet ist, zusätzlich zu der Soll-Position Eigenschaften des zu positionierenden Spannelements (12) anzeigen und/oder rückmelden zu können.

3. Vorrichtung (10) nach Anspruch 1 oder 2,
bei der die Positionserfassungseinrichtung (15) eingerichtet ist, die Position des Spannelements (12) in einer Raumrichtung, bevorzugt zwei Raumrichtungen (x, y) und noch bevorzugter drei Raumrichtungen (x, y, z), zu erfassen.

4. Vorrichtung (10) nach einem der Ansprüche 1 bis 3,
bei der die Positionserfassungseinrichtung (15) einen Sender aufweist, der eingerichtet ist, das Signal (S) drahtlos bereitzustellen.

5. Vorrichtung (10) nach einem der vorstehenden Ansprüche,
bei der mit dem Signal (S) mindestens ein weiterer mit den Spannelementen zusammenhängender Betriebsparameter übertragbar ist.

6. Vorrichtung (10) nach einem der vorstehenden Ansprüche,
bei der die Positionserfassungseinrichtung (15) mit dem mindestens einen Positionierungselement (14) verknüpft ist. (z. B. Drehgeber an Servomotor oder integrale Bauteile von Linearantrieb)

7. Vorrichtung (10) nach einem der vorstehenden Ansprüche,
die ferner ein Vergleichsmodul aufweist, das eingerichtet ist, einen Soll-Wert, insbesondere die Soll-Position mit der Ist-Position zu vergleichen, und bevorzugt ein mit dem Vergleichsmodul verbundenes Warnmodul, das eingerichtet ist, ein Kollisionswarnsignal auszugeben, wenn die Soll-Position nicht innerhalb eines festgelegten Toleranzwerts mit der Ist-Position übereinstimmt.

8. Vorrichtung (10) nach einem der vorstehenden Ansprüche,
die ferner ein Nachstellmittel, insbesondere einen Antrieb, bevorzugt einen Stellantrieb, aufweist, der die Position des Spannelements (12) auf Grundlage der Soll-Position und der Ist-Position zumindest nachstellt.

9. Vorrichtung (10) nach einem der vorstehenden Ansprüche,
bei der das Positionierungselement (14) ferner ein Umlenkelement (16) aufweist, um die Soll-Position des Spannelements (12), die bevorzugt über eine LED angezeigt wird, an die Positionserfassungseinrichtung (15) weiterzugeben.

10. Bearbeitungsstation zum Bearbeiten eines Werkstücks, insbesondere aus Holz, einem Holzersatzstoff, einem Metall und/oder einem Kunststoff mit einer Vorrichtung (10) zum Positionieren eines Spannelements (12) nach einem der vorstehenden Ansprüche.

11. Verfahren zum Positionieren eines Spannelements (12), das zum Fixieren eines Werkstücks in einer Bearbeitungsstation vorgesehen ist, mit den Schritten:
Anzeigen einer Soll-Position für das Spannelement (12) mit einem Positionierungselement (14),
Bewegen des Spannelements (12) mittels des Positionierungselements (14) zu der angezeigten Sollposition,
Erfassen der Ist-Position des Spannelements (12) mit einer Positionserfassungseinrichtung (15), die zumindest ein drahtloses, insbesondere optisches, magnetisches und/oder schallbasiertes, Element zur Positionserfassung aufweist, und
Bereitstellen eines Signals (S), das die Ist-Position des Spannelements (12) umfasst.

12. Verfahren zum Positionieren eines Spannelements (12) nach Anspruch 11,
bei dem ein Kollisionssignal ausgegeben wird, wenn die Soll-Position mehr als um einen festgelegten Toleranzwert von der Ist-Position abweicht.

13. Verfahren zum Positionieren eines Spannelements (12) nach Anspruch 11 oder 12,
bei dem das zu der Soll-Position bewegte Spannelement (12) auf Grundlage der Soll-Position und der ermittelten Ist-Position über einen Antrieb zumindest nachpositioniert wird, wenn die Soll-Position mehr als um einen festgelegten Toleranzwert von der Ist-Position abweicht.

## Claims

1. Device (10) for positioning a clamping element (12) which is provided in order to fix a workpiece in a machining station, said device (10) comprising:
at least one positioning element (14) which is configured to display the target position for a moveable clamping element (12) and to move the moveable clamping element (12) into the target position, and
a position detection device (15) which is configured to supply the machining station with a signal (S) which comprises the actual position of the clamping element (12), and which has at least one wireless, in particular optical, magnetic and/or acoustic-based element for position detection.

2. Device (10) according to claim 1,
wherein the device is configured, in addition to the target position, to display and/or feed back properties of the clamping element (12) which is to be positioned.

3. Device (10) according to claim 1 or 2,
wherein the position detection device (15) is configured to detect the position of the clamping element (12) in one spatial direction, preferably two spatial directions (x, y) and more preferably three spatial directions (x, y, z).

4. Device (10) according to one of the claims 1 to 3,
wherein the position detection device (15) has a transmitter which is configured to supply the signal (S) wirelessly.

5. Device (10) according to one of the preceding claims,
wherein at least one further operating parameter relating to the clamping elements can be transmitted with the signal (S).

6. Device (10) according to one of the preceding claims,
wherein the position detection device (15) is linked with the at least one positioning element (14) (e.g. rotary encoder on servomotor or integral components of linear drive).

7. Device (10) according to one of the preceding claims,
also having a comparison module which is configured to compare a target value, in particular the target position, with the actual position, and preferably a warning module connected with the comparison module which is configured to issue a collision warning signal if the target position does not correspond, within a defined tolerance value, with the actual position.

8. Device (10) according to one of the preceding claims,
also having readjusting means, in particular a drive, preferably an actuating drive, which at least readjusts the position of the clamping element (12) on the basis of the target position and the actual position.

9. Device (10) according to one of the preceding claims,
wherein the positioning element (14) also has a deflecting element (16) in order to pass on the target position of the clamping element (12), which is preferably displayed via an LED, to the position detection device (15) .

10. Machining station for machining a workpiece, in particular of wood, a wood substitute material, a metal and/or a plastic with a device (10) for positioning a clamping element (12) according to one of the preceding claims.

11. Method for positioning a clamping element (12), which is provided in order to fix a workpiece in a machining station, comprising the steps:
displaying a target position for the clamping element (12) with a positioning element (14),
moving the clamping element (12) by means of the positioning element (14) to the displayed target position,
detecting the actual position of the clamping element (12) with a position detection device (15) which has at least one wireless, in particular optical, magnetic and/or acoustic-based element for position detection, and
providing a signal (S) which comprises the actual position of the clamping element (12).

12. Method for positioning a clamping element (12) according to claim 11,
wherein a collision signal is issued if the target position deviates by more than a defined tolerance value from the actual position.

13. Method for positioning a clamping element (12) according to claim 11 or 12,
wherein the clamping element (12), moved to the target position, is, on the basis of the target position and the determined actual position, at least repositioned, via a drive, if the target position deviates by more than a defined tolerance value from the actual position.

## Revendications

1. Dispositif (10) pour le positionnement d'un élément de serrage (12) qui est prévu pour la fixation d'une pièce à usiner dans un poste d'usinage, dans lequel le dispositif (10) présente :
au moins un élément de positionnement (14) qui est aménagé afin d'afficher la position de consigne pour un élément de serrage (12) mobile et de déplacer l'élément de serrage (12) mobile dans la position de consigne, et
un dispositif de détection de position (15) qui est aménagé afin de mettre à disposition du poste d'usinage un signal (S) qui comporte la position réelle de l'élément de serrage (12), et qui présente au moins un élément sans fil, en particulier optique, magnétique et/ou basé sur le son pour la détection de la position.

2. Dispositif (10) selon la revendication 1,
pour lequel le dispositif est aménagé afin de pouvoir afficher et/ou signaler, outre la position de consigne, des propriétés de l'élément de serrage (12) à positionner.

3. Dispositif (10) selon la revendication 1 ou 2,
pour lequel le dispositif de détection de position (15) est aménagé afin de détecter la position de l'élément de serrage (12) dans un sens spatial, de préférence deux sens spatiaux (x, y) et de manière encore préférée trois sens spatiaux (x, y, z).

4. Dispositif (10) selon l'une quelconque des revendications 1 à 3,
pour lequel le dispositif de détection de position (15) présente un émetteur qui est aménagé afin de mettre à disposition sans fil le signal (S).

5. Dispositif (10) selon l'une quelconque des revendications précédentes,
pour lequel au moins un autre paramètre de fonctionnement connexe avec les éléments de serrage peut être transféré avec le signal (S).

6. Dispositif (10) selon l'une quelconque des revendications précédentes,
pour lequel le dispositif de détection de position (15) est relié à l'au moins un élément de positionnement (14). (par ex. un encodeur au servomoteur ou composants d'un seul tenant d'entraînement linéaire).

7. Dispositif (10) selon l'une quelconque des revendications précédentes,
qui présente de plus un module de comparaison qui est aménagé afin de comparer une valeur de consigne, en particulier la position de consigne avec la position réelle, et de préférence un module d'avertissement raccordé au module de comparaison qui est aménagé afin d'émettre un signal d'avertissement de collision si la position de consigne ne concorde pas dans une valeur de tolérance fixée avec la position réelle.

8. Dispositif (10) selon l'une quelconque des revendications précédentes,
qui présente de plus un moyen d'ajustage, en particulier un entraînement, de préférence un entraînement de réglage qui ajuste au moins la position de l'élément de serrage (12) sur la base de la position de consigne et de la position réelle.

9. Dispositif (10) selon l'une quelconque des revendications précédentes,
pour lequel l'élément de positionnement (14) présente de plus un élément de renvoi (16) afin de transmettre la position de consigne de l'élément de serrage (12), qui est indiquée de préférence par une DEL, au dispositif de détection de position (15).

10. Poste d'usinage pour l'usinage d'une pièce à usiner, en particulier en bois, en une matière de remplacement de bois, en un métal et/ou en une matière plastique avec un dispositif (10) pour le positionnement d'un élément de serrage (12) selon l'une quelconque des revendications précédentes.

11. Procédé de positionnement d'un élément de serrage (12) qui est prévu pour la fixation d'une pièce à usiner dans un poste d'usinage, avec les étapes :
l'affichage d'une position de consigne pour l'élément de serrage (12) avec un élément de positionnement (14),
le déplacement de l'élément de serrage (12) au moyen de l'élément de positionnement (14) vers la position de consigne affichée,
la détection de la position réelle de l'élément de serrage (12) avec un dispositif de détection de position (15) qui présente au moins un élément sans fil, en particulier optique, magnétique et/ou basé sur le son pour la détection de la position, et
la mise à disposition d'un signal (S) qui comporte la position réelle de l'élément de serrage (12).

12. Procédé de positionnement d'un élément de serrage (12) selon la revendication 11,
pour lequel un signal de collision est émis lorsque la position de consigne diverge plus d'une valeur de tolérance fixée de la position réelle.

13. Procédé de positionnement d'un élément de serrage (12) selon la revendication 11 ou 12,
pour lequel l'élément de serrage (12) déplacé vers la position de consigne sur la base de la position de consigne et de la position réelle déterminée est au moins repositionné par un entraînement, si la position de consigne diverge de plus d'une valeur de tolérance fixée de la position réelle.
